(19) Europäisches Patentamt / European Patent Office / Office européen des brevets

(11) **EP 3 582 153 A1**

(12) **EUROPEAN PATENT APPLICATION**

(43) Date of publication:
**18.12.2019 Bulletin 2019/51**

(51) Int Cl.:
**G06N 20/00** *(2019.01)*     **G06N 3/02** *(2006.01)*

(21) Application number: **19179160.7**

(22) Date of filing: **07.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.06.2018   US 201816009725**

(71) Applicant: **Palo Alto Research Center Incorporated**
**Webster, NY 14580 (US)**

(72) Inventors:
• **MATEI, Ion**
  **Sunnyvale, CA California 94087 (US)**
• **DE KLEER, Johan**
  **Los Altos, CA California 94024 (US)**
• **MINHAS, Rajinderjeet S.**
  **Palo Alto, CA California 94306 (US)**
• **FELDMAN, Alexander**
  **Santa Cruz, CA California 95060 (US)**

(74) Representative: **Gill Jennings & Every LLP**
**The Broadgate Tower**
**20 Primrose Street**
**London EC2A 2ES (GB)**

(54) **GENERATING HYBRID MODELS OF PHYSICAL SYSTEMS**

(57)    Systems and methods described receive a set of experimental data of connection points of an unknown component of a partially known physical system. The systems and methods set feasibility constraints for an untrained model of the unknown component and simulate the partially known system using the untrained model of the unknown component to generate simulated data at the connection points of the unknown component. Systems and methods then optimize the untrained model based on the feasibility constraints and a comparison of the simulated data and the experimental data to generate a trained model of the unknown component.

FIG. 1

**Description**

Implementations of the present disclosure relate to data based analytics of physical systems.

The use of simulated models of physical systems can aid in diagnostic, prognostic, and other analysis of physical systems. For example, computer simulations of circuit containing known components can determine where a failure is occurring or likely to occur. However, such simulated models require knowledge of various parameters of the components of the physical system

Fig. 1 is a schematic diagram of an embodiment of systems to generate and apply a model of an unknown component of a partially known system, which can be used in accordance with some embodiments.

Fig. 2A is a circuit diagram having multiple physical components, which can be analyzed in accordance with some embodiments.

Fig. 2B is a circuit diagram having multiple physical components, which can be analyzed in accordance with some embodiments.

Fig. 3 is a diagram of an unknown component of a physical system, which can be analyzed in accordance with some embodiments.

Fig. 4 is a schematic diagram of an embodiment of a partially known physical system, which can be analyzed in accordance with some embodiments.

Fig. 5 is a flow diagram of an embodiment of a method of generating a machine learning model, in accordance with some embodiments.

Fig. 6 is an illustration showing an example computing device which may implement the embodiments described herein.

Described herein are systems that generate models of unknown components of partially known physical systems. Such physical systems can include electrical systems, mechanical systems, electromechanical systems, or other systems with components that obey physical laws. In a partially known physical system, one or more components of the physical system does not have an accurate physical model that can be used in diagnostic, prognostic, or other simulations or analysis of the physical systems. Accordingly, as described herein, systems and methods are described that enable generation and use of models of unknown components of physical systems. The component models can then be used with the remaining portions of the partially known physical systems as a complete model.

Machine learnings systems can generate input-output maps for complex systems given appropriate mathematical models and sufficient computational power. However, learning models for physical components is more challenging due to the lack of input and output notions. For instance, physical components of a system have inherently acausal behaviors. Causal representations of physical systems can be obtained under certain conditions. As an example, an input-output model for a resistor may depend on the type of sources and other constraints on the system. Thus, whether a resistor is attached to a voltage or current source changes the causal representation and thus how resistor operates. Accordingly, systems disclosed herein utilize parametric models of physical components of a system to generate models that conform to physical constraints of a partially known physical system and characteristics of the unknown components.

As an example, having a structural description of a mechanical system (such as a rail switch) and partial electrical specifications of components may be inadequate to create a complete system model if one or more physical parts remain without a specification or model. As another example, an unknown non-linear resistor in a circuit may not be modeled and therefore may hinder diagnostic, prognostic, or other analysis of systems into which the resistor is placed. The systems and methods as described herein provide improvements to computer technologies to enable modeling of such components to enable component level analysis of systems.

In order to generate a model describing an unknown component, a model generation system can simulate the known components in a system and compare the results of the simulation with measured observations of the system. During simulation, the unknown components can be simulated according to a set of parameters of an untrained model of the unknown components and constraints within the system. The parameters can then be updated after comparison of the simulation to the observed system in order to optimize the parameters and generate a trained model of the unknown physical components.

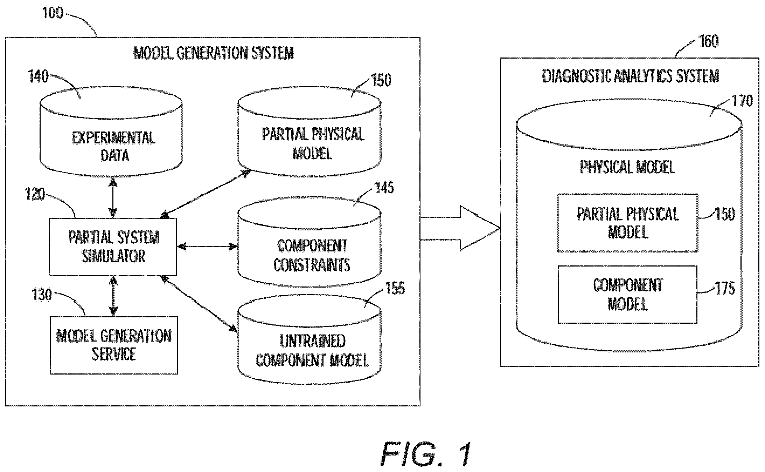

Figure 1 is a diagram showing a model generation system 100 and an analytics system 160. The model generation system 100 generates a component model 175 of an unknown component of a physical system based on a partial physical model 150 of the physical system, experimental data 140 of the physical system, as well as component constraints 145 that ensure physical meaning of characteristics of the unknown component are retained in a physical model 170. The generated component model 175 can then be used by a diagnostic analytics system 160 to perform diagnostic, prognostic, or other analysis using a physical model 170 that includes the trained component model 175.

The model generation system 100 shown in Figure 1 enables acausal modeling of unknown components of a physical system. While causal systems (whose outputs depend on the past and current inputs) can be modeled using certain machine learning techniques, these techniques treat systems as black-box models without necessarily connecting the internals of the model with physical understanding. Although such models can be useful for predictions, they are less useful for model-based diagnostics and prognostics methods that require information about the structure (components and sub-components) of the system. In some embodiments as described herein, the acausal physical systems may be modeled as differential algebraic equations. For example, the following set of equations can be used to model certain physical systems.

$$0 = \mathbf{F}(\,'\mathbf{x}, \mathbf{x}, \mathbf{z})$$

$$\mathbf{y} = \mathbf{h}(\mathbf{x}, \mathbf{z})$$

These systems can use $\mathbf{x}$ as a state vector, $\mathbf{z}$ as a vector of algebraic variables, and $\mathbf{y}$ as an output vector. The model is then composed of variables attached to components and relationships between the components. Thus, the components and relationships maintain the physical meaning of those components in the acausal model. Often system manufacturers would like to improve their offerings by including (model-based) diagnosis and prognostics features in their products. However, they do not always have access to detailed specifications of the sub-components, when such subcomponents are acquired from a third-party, due to proprietary reasons. Accordingly, systems as described herein may generate models of the unknown third components in order to enable additional analysis of physical systems.

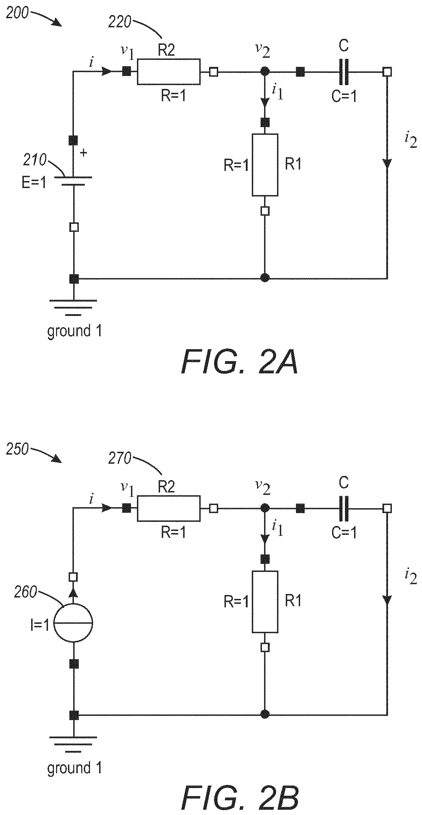

As an example of improvements offered by learning acausal models for physics-based components, the electrical circuits 200, 250 in Figs. 2A-2B are similar with one having a current source and the other having a voltage source. Causal equations that determine the behavior of circuit 200 can be derived from the physical laws that govern the behavior of each component (iR = v and Cdvdt = i) plus the equations generated when connecting the known components. Through equation manipulation, a causal representation for the behavior of the circuit 200 as shown below.

$$\frac{dv_2}{dt} := -\frac{1}{C}\left(\frac{1}{R_1} + \frac{1}{R_2}\right)v_2 + \frac{1}{CR_2}E$$

$$i_1 := \frac{1}{R_1}v_2$$

$$i := \frac{1}{R_2}(E - v_2)$$

$$i_2 := i - i_1$$

In a similar manner, the causal behavior for circuit 250 can be modeled, but with different results. As shown below, the current and voltage of the system results in significantly different behavior equations with the changing of one element.

$$\frac{dv_2}{dt} = -\frac{1}{CR_1}v_2 + \frac{1}{C}I$$

$$i_1 \quad := \quad \frac{1}{R_1} v_2$$

$$v_1 \quad := \quad v_2 + IR_2$$

$$i_2 \quad := \quad I - i_1$$

While potentially useful, the casual equations do not provide sufficient modeling of the physical components to provide full models for physical systems with non-linear components. If instead of known resistor and capacitor elements, the circuits 200 or 250 had non-linear resistive components, simulations of the circuits may fail due to the non-linear relationship of parameters. One option would be to consider the causal representation of the first example circuit 200 with the current equation is replaced with:

$$i := f(E - v2; w)$$

where $f(x; w)$ is a function that takes as input $x$ and depends on a vector of parameters $w$. Function $f(x; w)$ can be any type of function including a polynomial or a having a more complex representation such as a neural network. Assuming access to experimental data that includes $v2$ an optimization process can determine the parameters w. Having a representation for the function $f(x; w)$ attempts to simulate the example circuit 200 where a current source is used fail. Based on the function $f(x; w)$ the physical law governing the equation of $R2$ is $i = f(E - v_2; w)$. When simulating the circuit 250 shown in Figure 2B, the simulator attempts to simulate a physical system with the equation $i = f(v_1 - v_2; w)$ for $v_1$. However, a simulator for the circuit 250 may require the inverse of the first derivative of $f$ with respect to $v_1$, namely $\partial v_1$. If the simulation fails, the reason might be that for some values of $v_1$ the inverse of derivative with respect to $v_1$ may not actually exist. Take for instance the case where the model $f$ as a polynomial of the form $f(x; w) = w_0 + w_1 x + w_2 x^2$. The derivative of $_f$ with respect to x is $f'(x) = w_1 + 2w_2 x$ which is not invertible for a voltage x = - $w_1 / w_2$. Hence additional constraints on $f$ and/or the vector of parameters w must be imposed to ensure that the learning process produces a physically feasible model for the behavior of resistor $R_2$. Similar constraints can be generated for other physical systems.

Components of a physical system include one or more connections points to other components in the system. As discussed with reference to electrical components, the connections are pins that connect other elements of a circuit. Those connections add additional constraints to models of the system based on the physical laws which they obey. In particular, for electrical components, a pin is characterized by two variables: current and potential. The current is a flow variable that is conserved at the connection point. That is all currents for a component sum up to zero at a given time. The potential is an across variable. In a model of a physical component, the components have at least one flow variable and a potential like variable (in the thermo-fluid domain there may be several such variables).

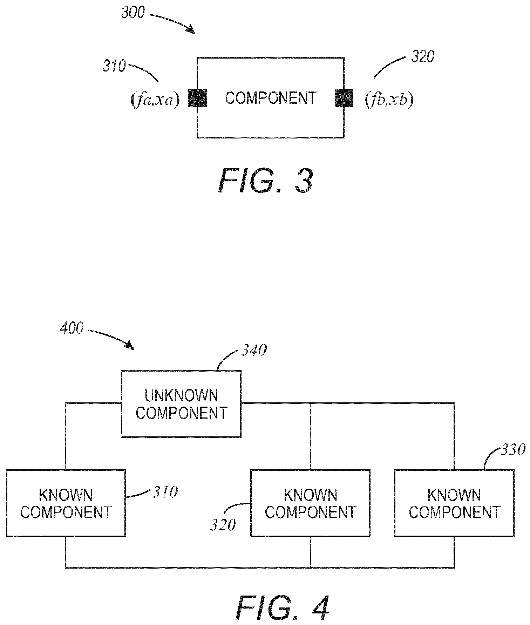

Figure 3 illustrates a model of a generic physical component 300 as may be modeled by systems and methods as described herein. The example physical component 300 has two connectors 310, 320. Each connector is modeled with two variables: a flow variable $f$ and a potential like variable $x$. Depending on the physical domain, the flow variable can be current (electric), force (translational mechanics), torque (rotational mechanics) or heat flow rate (thermal). The variable $x$ can represent electric potential (electric), displacement (translational mechanics), angle (rotational mechanics) or temperature (thermal). A model provides a set of equations that describe the relations between the pairs of variables $(f_a, x_a)$ and $(f_b, x_b)$. In some embodiments, models of physical components can include additional variables at the connectors 310, 320 as well as additional connectors.

The constraints applied during training of component models assure that the system can be simulated and that the component models correspond to the physics in the system. In some embodiments the constraints can include both feasibility constraints and passivity constraints. Feasibility constraints assure that the mathematical model describes the behavior of the real component in different usage scenarios. For instance, the model would provide accurate simulation under different environments. In a circuit context, this can mean that a non-linear resistor model would provide accurate behavioral predictions in contexts involving both current source operation and voltage source operation. Feasibility constraints also ensure that the component has an interface compatible with other connected components. Thus, the behaviors at the output of the modeled component must be compatible with the behaviors of other connected known or unknown components. In some embodiments, this may further include additional constraints at boundary conditions and other components of the system.

Passivity constraints may apply to certain component models wherein the component is known to be passive.

To be passive, a component must not generate its own energy in a system, but only dissipate energy generated by other sources. For example, a resistor in a circuit dissipates energy that is received, while a transistor may be an active component that provides energy through a system. If an unknown component is known to be a passive element in a system, passivity constraints can further define the parameters available when generating a model of the component.

While described generally with reference to two terminal components, the systems and methods described herein apply to components with additional terminals or connections. For example, components in a mechanical system may have multiple connected components to multiple terminals. Furthermore, the model generation systems described herein generally refer to generating a model with a single unknown component. However, the systems and methods describe herein apply as well to partially known systems with multiple unknown components. Such models may be generated by applying feasibility or passivity constraints to each of those components and optimizing those models based on simulation of the partially known system.

Referring back to Figure 1, the partial physical model 150 can include a model of individual components of a physical system, connections between those components, and a model of their interactions. Referring to the physical system 400 illustrated in Figure 4, an example partial physical model 150 can include a model for each of known components 410, 420, 430, as well as a description of how the components are connected and the interaction of each of the connectors of each of the components. Parameters of unknown component 440 may not be included in the partial physical model 150, as they are unknown, but the connections to other components of the physical system 400 may be included as part of the partial physical model.

Experimental data 140 can include measurements of different connection points within a physical system at different times and in response to different inputs. For example, in the example illustrated in Figure 4, each of the connection points of each of the known components 410, 420, 430, may have measurements of one or more variables. The experimental data 140 also includes measurements of variables of interest for the unknown component 440. Those measurements can then be used by the model generation system 100 to determine a model for the unknown physical component 440.

Component constraints 145 are used by the model generation system 100 to ensure that a component model generated for an unknown component includes physical meaning sufficient for later use for diagnostic or prognostic analysis. These constraints enable learning of a component model 175 by repeated simulations of the partial physical model 150. In some embodiments, component constraints 145 include a number of constraints which may be either feasibility constraints or passivity constraints. Feasibility constraints assure that the mathematical model describes the behavior of the real component in different usage scenarios. For instance, the model would provide accurate simulation under different environments. In a circuit context, this can mean that a non-linear resistor model would provide accurate behavioral predictions in contexts involving both current source operation and voltage source operation. Feasibility constraints also ensure that the component has an interface compatible with other connected components. Thus, the behaviors at the connectors of the modeled component must be compatible with the behaviors of other connected known or unknown components. In some embodiments, this may further include additional constraints at boundary conditions and other components of the system.

Passivity constraints may apply to certain component models wherein the component is known to be passive. To be passive, a component must not generate its own energy in a system, but only dissipate energy generated by other sources. For example, a resistor in a circuit dissipates energy that is received, while a transistor may be an active component that provides energy through a system. If an unknown component is known to be a passive element in a system, passivity constraints can further define the parameters available when generating a model of the component.

As discussed above, the constraints ensure that when training the component model 175, the partial physical model 150 remains able to be simulated. Thus, as simulations are repeated, an untrained component model 155 can be optimized. In order to set component constraints 145 in a system, certain characteristics of the component can be used to generate template equations to the system. One of the most common behavioral templates corresponds to the case where no flow is lost through the components. In some embodiments, this template can be used in linear or nonlinear components from multiple domains such as resistors, capacitors, inductors, springs, or dampers. This is the case for passive components, but can also be provided for non-passive components, the behavioral equations are given by:

$$G_1(f_a, f_b) = f_a + f_b \;=\; 0$$

$$G_2\big(f_a, \ldots, f_a^{(m)}, x_a - x_b, \ldots, x_a^{(n)} - x_b^{(n)}; w\big) \;=\; 0,$$

In a second potential model the flow at different connectors in the component may be different. This is the case of the active components where an external signal can determine flow losses. In some embodiments this template can correspond to mechanical brakes, viscous losses, other mechanical or fluid losses through a system, or active components with external control mechanisms to control flow. The template for this case can be expressed as:

$$G_1(x_a, x_b) = x_a - x_b \;\; = \;\; 0$$

$$G_2(f_a, \ldots, f_a^{(m)}, f_b, \ldots, f_b^{(m)}, x_a, \ldots, x_a^{(n)}, u; w) \;\; = \;\; 0$$

In some embodiments, there may be components having one or more flow and potential type equations are completely separate. An example is the case of ideal gears or other systems with unrelated parameters at connections. These models may also be used for completely unknown components, which may be passive or active and have unknown flow variables. The templates for these cases can be given as:

$$G_1(f_a, \ldots, f_a^{(m)}, f_b, \ldots, f_b^{(m)}; w) = \;\; = \;\; 0$$

$$G_2(x_a, \ldots, x_a^{(n)}, x_b, \ldots, x_b^{(n)}; w) \;\; = \;\; 0$$

In some embodiments, these models or others can be used with the set of equations for the physical components to determine those parameters of the unknown component that enable a simulation of the physical system. In some embodiments, this involves determining the invertability of a Jacobian of the trajectory of feasible parameters in a search space. Thus, the parameters of the untrained component model 155 are constrained to those where the physical system can be simulated. Furthermore, in some embodiments, the Jacobian and constraints can be re-evaluated at each time step of the simulation process to ensure that the Jacobian remains invertible. In some embodiments, the model generation system may include additional constraints, such as constraints on boundary conditions for the connections of the unknown model. These constraints can be based on the additional physical components to which the unknown component is connected. For example, in the physical system 400 shown in Figure 4, there may be additional constraints on the change of variables of the unknown component 440 based on the known behavior of the known components 410, 420, 430. With the constraints set, the model generation system 100 can train an untrained component model 155.

Untrained component model 155 can include one or more models for an unknown physical component. For example, the untrained component model 155 can be a non-optimized model of an unknown component 440 as shown in Figure 4. In some embodiments, the untrained component model 155 may be a polynomial model, a neural network, or another model of the physical component. For any type of model, the untrained component model 155 may have a set of parameters that the model generation system 100 optimizes to determine a trained component model 175. As the untrained component model 155 is trained, the parameters are updated by a model generation service 130 until the untrained component model 155 approximates the experimental data 140 during simulation.

The physical system simulator 120 provides a simulation of the partially known physical system based on the partial physical model 150 and the untrained component model 155. The physical system simulator may begin at a point in time with known initial conditions and known inputs based on experimental data 140. The physical system simulator 120 then simulates using the models 150, 155. The simulation may include simulating changes to one or more measured variables at multiple points in time to show the behavior of the physical system. As the untrained component model 155 is being optimized based on the experimental data 140 the measured variables in the simulation may converge to the experimental data 140. The physical system simulator 120 may generate an output of multiple variables at different points in the physical system. In some embodiments, the output variables correspond to those that were received in the experimental data.

The model generation service 130 updates parameters of the untrained component model 155 based on differences between simulated behaviors of the physical system and experimental data 140 measured from the physical system. For example, if the simulation is far from the experimental data 140, parameters of the untrained component model 155 may be changed a large amount to improve the model. If the simulation shows behaviors close to the experimental data 140, the model generation service 130 may change the parameters of the untrained component model 155 to a lesser extent.

Unlike standard ML problems, training based on behavior of an unknown component in a partially unknown physical system does not necessarily include learning an input and output of a map of the component. Rather the model learns indirect information about the behavior of a component through a set of measurements, some of which may be measurements taken at other components. However, based on the connection in the system, the measurements taken at one component in the partially unknown physical system contain information about the behavior of the unknown component. In other words, the behavior of the unknown component is observable through the available measurements. Accordingly, the model generation service 130 performs a parameter estimation with feasibility constraints as discussed above. In some embodiments, the parameter estimation may be performed using filtering methods by extending the state vector to include the parameter vector (e.g. Kalman filtering, or the like). In various embodiments, one or more of methods may be used to solve optimization problems with inequality constraints, including, but not limited to: penalty methods, barrier methods, primal methods, or sequential quadratic programming (SQP). As the evaluation of the unknown component is performed using simulation, then the parameters searched using any optimization technique follow the constraint that the Jacobian is invertible.

At an initial time, the model generation service 130 has the physical system simulator 120 simulate the system with an initial set of parameters for the untrained component model 155. There is no guarantee that the unconstrained optimization problem is convex, therefore, in some embodiments, the model generation service 130 may use a global optimization method to avoid settling on a local minima that does not accurately model the physical component.

After training the untrained component model 155, the model generation system 100 outputs a component model 175 to a diagnostic analytics system 160. Although referred to as a diagnostics, the diagnostics analytics system 160 may also perform prognostic or other analytic functions using a physical model 170. The physical model 170 can include the partial physical model 150, which models the known components of a partially known system as discussed above. The physical model 170 may also include the component model 175 of the unknown component. The diagnostic analytics system 160 can use a simulation engine or other analytic tools to determine one or more diagnostic outputs for a physical system based on an operating environment of the physical system. For example, the diagnostic analytics system 160 may input new measured behaviors of the physical system and use the physical model 170 (including the component model 175) to generate a diagnostic of one or more components or subsystems of the physical system that is causing the behavior. In addition, the physical model 170 can be used for prognostic analysis. For example, the diagnostic analytics system 160 can use intended inputs or outputs to the physical system and the physical model 170 to determine, load, losses, efficiency, wear, or other features of the physical system in response to those inputs or outputs. Additionally, other analytics may be performed by the diagnostic analytics system 160. For example, modeling the response of the physical system in response to changing of one or more components, failing of one or more components, or other change to the physical system where the component model 175 remains a valid model of the unknown component.

The diagnostic analytics system 160 can then provide an output indicating predicted measurements of variables associated with various components or nodes of the physical model. In some embodiments, the output may also include a recommendation about operating parameters of the physical system based on known maximum operating parameters of the system. In some embodiments, the output may be provided as a user interface as part of an analytics platform.

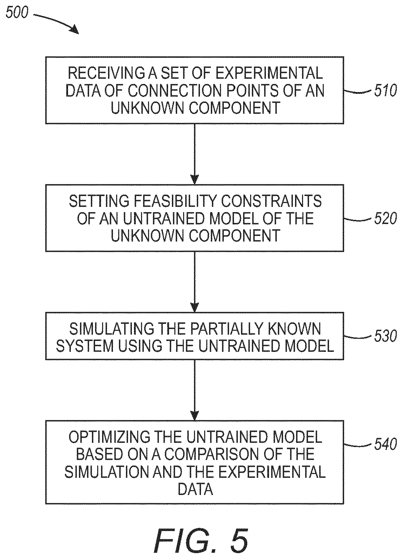

Figure 5 is a flowchart 500 illustrating example operations of a model generation system. For example, the processes described with reference to Figure 5 may be performed by a model generation system 100 as described with reference to Figure 1. Beginning at block 510, the model generation system receives a set of experimental data of connection points of an unknown component. The experimental data may include measurements of variables at the connections points at different points in time and under different operating conditions of the physical system. In some embodiments, the experimental data may also include measurements of the same or different variables at other connection points of other components of the physical system.

In block 320, the model generation system sets feasibility constraints for an untrained model of the unknown component. The untrained model includes a number of parameters to be optimized by the model generation system. The feasibility constraints can be used by the model generation system to reduce the search space for the parameters of the untrained model to those that have physical meaning in the system. For example, the constraints can ensure that the parameters describe behaviors of the physical components in different usage scenarios as well as obey boundary conditions that may be determined by connections to other components within the physical system. In some embodiments, the model generation system also sets passivity constraints for the component. For example, if a component is known to only consume power, then the parameters can be constrained to those that represent consumption of power and not include those that represent generation or change production of power.

In block 330, the model generation system simulated the partially known system using the untrained model for the unknown component. In a first iteration, the simulation may begin with random parameters for the untrained model and proceed through a simulation at different time steps. During subsequent iterations, the parameters may have been updated, however the simulation uses updated versions of the untrained model to continue to simulate the partially known physical system. In some embodiments, the experimental data may include measurements of the unknown component during in different usage conditions. The simulation process may be repeated in multiple of these usage conditions.

In block 340, the model generation system optimizes the untrained model based on a comparison of the simulated data and the experimental data to generate a trained model of the unknown component. The optimization may include updating of parameters within the feasibility constraints during multiple iterations of simulating the physical systems. For example, a neural network may be updated using back-propagation based on the comparison of the system. If the model is a polynomial or other type of function, the comparison of the simulated data to the experimental data may similarly be used to update one or more parameters of the model. After generation of the model, it can then be used by an analytics system (e.g., diagnostic analytics system 150 in Figure 1, or the like) in order to provide analysis of the partially known physical system while retaining physical meaning of the system.

Various operations are described as multiple discrete operations, in turn, in a manner that is most helpful in understanding the present disclosure, however, the order of description may not be construed to imply that these operations are necessarily order dependent. In particular, these operations need not be performed in the order of presentation.

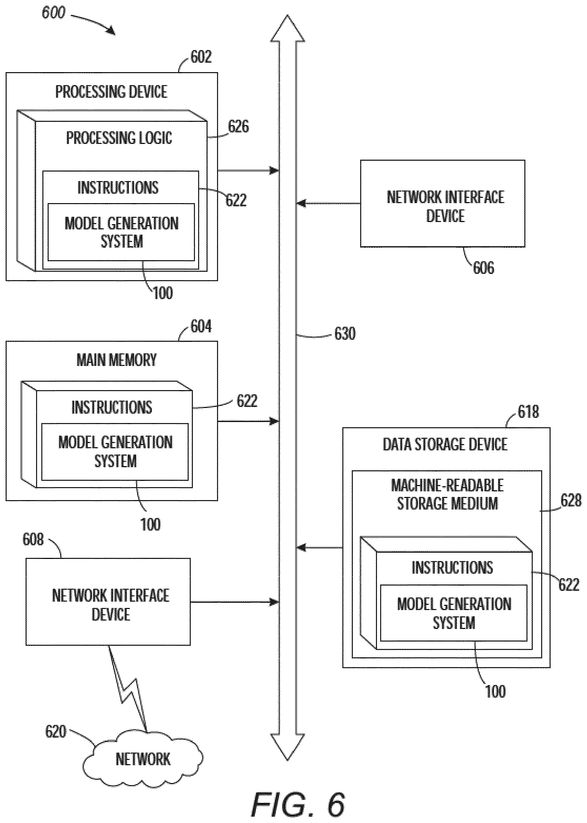

Figure 6 illustrates a diagrammatic representation of a machine in the example form of a computer system 600 within which a set of instructions, for causing the machine to perform any one or more of the methodologies discussed herein, may be executed. For example, the instructions may execute the model generation system 100 or diagnostic analytics system 160 including generation and use of a trained model for an unknown component of a partially known physical system. In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In one embodiment, computer system 600 may be representative of a server computer system, such as model generation system 100 or diagnostic analytics system 160 including generation and use of a trained model for an unknown component of a partially known physical system..

The exemplary computer system 600 includes a processing device 602, a main memory 604 (e.g., read-only memory (ROM), flash memory, dynamic random access memory (DRAM), a static memory 606 (e.g., flash memory, static random access memory (SRAM), etc.), and a data storage device 618, which communicate with each other via a bus 630. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

Processing device 602 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 602 may also be one or more special-purpose processing devices such as an application specific integrated circuit (ASIC), a field programmable gate array (FPGA), a digital signal processor (DSP), network processor, or the like. The processing device 602 is configured to execute processing logic 626, which may be one example of model generation system 100 shown in Figure 1, for performing the operations and steps discussed herein.

The data storage device 618 may include a machine-readable storage medium 628, on which is stored one or more set of instructions 622 (e.g., software) embodying any one or more of the methodologies of functions described herein, including instructions to cause the processing device 602 to execute model generation system 100 or analytics system 160. The instructions 622 may also reside, completely or at least partially, within the main memory 604 or within the processing device 602 during execution thereof by the computer system 600; the main memory 604 and the processing device 602 also constituting machine-readable storage media. The instructions 622 may further be transmitted or received over a network 620 via the network interface device 608.

The machine-readable storage medium 628 may also be used to store instructions to perform a method for analyzing log data received from networked devices, as described herein. While the machine-readable storage medium 628 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable medium includes any mechanism for storing information in a form (e.g., software, processing application) readable by a machine (e.g., a computer). The machine-readable medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

The preceding description sets forth numerous specific details such as examples of specific systems, components, methods, and so forth, in order to provide a good understanding of several embodiments of the present disclosure. It will be apparent to one skilled in the art, however, that at least some embodiments of the present disclosure may be practiced without these specific details. In other instances, well-known components or methods are not described in detail or are presented in simple block diagram format in order to avoid unnecessarily obscuring the present disclosure. Thus, the specific details set forth are merely exemplary. Particular embodiments may vary from these exemplary details and still be contemplated to be within the scope of the present disclosure.

Additionally, some embodiments may be practiced in distributed computing environments where the machine-readable medium is stored on and or executed by more than one computer system. In addition, the information transferred between computer systems may either be pulled or pushed across the communication medium connecting the computer systems.

Embodiments of the claimed subject matter include, but are not limited to, various operations described herein. These operations may be performed by hardware components, software, firmware, or a combination thereof.

Although the operations of the methods herein are shown and described in a particular order, the order of the operations of each method may be altered so that certain operations may be performed in an inverse order or so that certain operation may be performed, at least in part, concurrently with other operations. In another embodiment, instructions or sub-operations of distinct operations may be in an intermittent or alternating manner.

The above description of illustrated implementations of the invention, including what is described in the Abstract, is not intended to be exhaustive or to limit the invention to the precise forms disclosed. While specific implementations of, and examples for, the invention are described herein for illustrative purposes, various equivalent modifications are possible within the scope of the invention, as those skilled in the relevant art will recognize. The words "example" or "exemplary" are used herein to mean serving as an example, instance, or illustration. Any aspect or design described herein as "example" or "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or". That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an embodiment" or "one embodiment" or "an implementation" or "one implementation" throughout is not intended to mean the same embodiment or implementation unless described as such. Furthermore, the terms "first," "second," "third," "fourth," etc. as used herein are meant as labels to distinguish among different elements and may not necessarily have an ordinal meaning according to their numerical designation.

## Claims

1. A method comprising:

   receiving a set of experimental data of connection points of an unknown component of a partially known physical system;
   setting, by a processing device, feasibility constraints for an untrained model of the unknown component;
   simulating the partially known system using the untrained model of the unknown component to generate simulated data at the connection points of the unknown component; and
   optimizing, by the processing device, the untrained model based on the feasibility constraints and a comparison of the simulated data and the experimental data to generate a trained model of the unknown component.

2. The method of claim 1, wherein optimizing the untrained model comprises:

   determining available parameters of the untrained model based on the feasibility constraints; and
   updating the parameters of the untrained model to reduce errors between the simulation data and the experimental data.

3. The method of claim 1, further comprising setting passivity constraints for the untrained model of the unknown component.

4. The method of claim 1, further comprising generating a model-based diagnostic output for the physical system using a system model of the physical system, wherein the system model comprises the trained model of the unknown component.

**5.** The method of claim 1, wherein the untrained model comprises an untrained neural network.

**6.** The method of claim 1, wherein the partially known physical system comprises an electromechanical system and the unknown component comprises one of an electrical or mechanical component.

**7.** The method of claim 1, further comprising:

receiving a second set of experimental data at second connection points of a second unknown component; and optimizing a second untrained model of the second unknown component to generate a second trained model of the second unknown component.

**8.** The method of claim 1, wherein the experimental data comprises data measured from one or more connection points or nodes of the physical system in different conditions.

**9.** The method of claim 1, wherein simulating the partially known system comprises:

simulating the partially known system according to first conditions associated with a first portion of the experimental data; and
simulating the partially known system according to second conditions associated with a second portion of the experimental data.

**10.** A system comprising:

a memory device; and
a processing device operatively coupled to the memory device, wherein the processing device is to:

receive a set of experimental data of one or more connection points a partially known physical system, wherein the partially known physical system comprises an unknown component;
generate, by a processing device, feasibility constraints for an untrained model of the unknown component;
simulate the partially known system using the untrained model of the unknown component to generate simulated data corresponding to the experimental data; and
optimize the untrained model based on the feasibility constraints and a comparison of the simulated data and the experimental data to generate a trained model of the unknown component.

**11.** The system of claim 10, wherein to optimize the untrained model the processing device is further to:

determine available parameters of the untrained model based on the feasibility constraints; and
update the parameters of the untrained model to reduce errors between the simulation data and the experimental data.

**12.** The system, of claim 10, wherein the processing device is further to generate passivity constraints for the untrained model of the unknown component.

**13.** The system of claim 10, wherein the processing device is further to generate a model-based diagnostic output for the physical system using a system model of the physical system, wherein the system model comprises the trained model of the unknown component.

**14.** The system of claim 10, wherein the processing device is further to:

receive a second set of experimental data at second connection points of a second unknown component; and
optimize a second untrained model of the second unknown component to generate a second trained model of the second unknown component.

**15.** The system of claim 10, wherein to simulate the partially known system, the processing device is to:

simulate the partially known system according to first conditions associated with a first portion of the experimental data; and
simulate the partially known system according to second conditions associated with a second portion of the experimental data.

16. A non-transitory computer-readable medium having instructions stored thereon that, when executed by a processing device, cause the processing device to:

   receive a set of experimental data of a partially known physical system;
   generate, by a processing device, feasibility constraints for an untrained model of an unknown component of the partially known physical system;
   simulate the partially known system using the untrained model of the unknown component to generate simulated data of the partially known physical system; and
   optimize, by the processing device, the untrained model based on the feasibility constraints and a comparison of the simulated data and the experimental data to generate a trained model of the unknown component.

17. The non-transitory computer-readable medium of claim 16, wherein to optimize the untrained model the instructions further cause the processing device to:

   determine available parameters of the untrained model based on the feasibility constraints; and
   update the parameters of the untrained model to reduce errors between the simulation data and the experimental data.

18. The non-transitory computer-readable medium of claim 16, wherein the instructions further cause the processing device to generate passivity constraints for the untrained model of the unknown component.

19. The non-transitory computer-readable medium of claim 16, wherein the instructions further cause the processing device to:

   receive a second set of experimental data at second connection points of a second unknown component; and
   optimize a second untrained model of the second unknown component to generate a second trained model of the second unknown component.

20. The non-transitory computer-readable medium of claim 16, wherein to simulate the partially known system the instructions further cause the processing device to:

   simulate the partially known system according to first conditions associated with a first portion of the experimental data; and
   simulate the partially known system according to second conditions associated with a second portion of the experimental data.

FIG. 1

FIG. 2A

FIG. 2B

*300*

*310* *320*

$(fa,xa)$ ■ COMPONENT ■ $(fb,xb)$

## FIG. 3

*400*

*340*

UNKNOWN
COMPONENT

KNOWN
COMPONENT *310*

KNOWN
COMPONENT
*320*

*330*

KNOWN
COMPONENT

## FIG. 4

500

| RECEIVING A SET OF EXPERIMENTAL DATA OF CONNECTION POINTS OF AN UNKNOWN COMPONENT | 510 |

↓

| SETTING FEASIBILITY CONSTRAINTS OF AN UNTRAINED MODEL OF THE UNKNOWN COMPONENT | 520 |

↓

| SIMULATING THE PARTIALLY KNOWN SYSTEM USING THE UNTRAINED MODEL | 530 |

↓

| OPTIMIZING THE UNTRAINED MODEL BASED ON A COMPARISON OF THE SIMULATION AND THE EXPERIMENTAL DATA | 540 |

FIG. 5

*600*

*602*

PROCESSING DEVICE

PROCESSING LOGIC — *626*

INSTRUCTIONS — *622*

MODEL GENERATION SYSTEM

*100*

NETWORK INTERFACE DEVICE

*606*

*630*

*604*

MAIN MEMORY

INSTRUCTIONS — *622*

MODEL GENERATION SYSTEM

*100*

*618*

DATA STORAGE DEVICE

MACHINE-READABLE STORAGE MEDIUM — *628*

INSTRUCTIONS — *622*

MODEL GENERATION SYSTEM

*100*

*608*

NETWORK INTERFACE DEVICE

*620*

NETWORK

*FIG. 6*

Europäisches
Patentamt

European
Patent Office

Office européen
des brevets

# EUROPEAN SEARCH REPORT

Application Number

EP 19 17 9160

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ion Matei ET AL: "The Case for a Hybrid Approach to Diagnosis: A Railway Switch Design Space Exploration View project The International Diagnostic Competition View project The Case for a Hybrid Approach to Diagnosis: A Railway Switch", <br><br> 1 August 2015 (2015-08-01), XP055632016, Retrieved from the Internet: URL:https://www.researchgate.net/profile/Tomonori_Honda/publication/305731351_The_Case_for_a_Hybrid_Approach_to_Diagnosis_A_Railway_Switch/links/579e780e08ae802facbded77/The-Case-for-a-Hybrid-Approach-to-Diagnosis-A-Railway-Switch.pdf [retrieved on 2019-10-15] * abstract * * figure 1 * * page 225, left-hand column, line 1 - page 229, left-hand column, line 37 * | 1-20 | INV. G06N20/00 <br><br> ADD. G06N3/02 |

-----

TECHNICAL FIELDS SEARCHED (IPC)

G06N

The present search report has been drawn up for all claims

| Place of search | Date of completion of the search | Examiner |
|---|---|---|
| The Hague | 16 October 2019 | Appeltant, Lennert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)